**Europäisches Patentamt**

**European Patent Office**

**Office européen des brevets**

(19)

(11) Veröffentlichungsnummer: **0 090 295**
**B1**

(12)
# EUROPÄISCHE PATENTSCHRIFT

(45) Veröffentlichungstag der Patentschrift:
**01.07.87**

(51) Int. Cl.⁴: **F 16 J 1/04,** F 16 J 1/18

(21) Anmeldenummer: **83102730.5**

(22) Anmeldetag: **19.03.83**

(54) **In einer Zylinderbuchse auf und ab bewegbarer Kolben.**

(30) Priorität: **29.03.82 US 362816**

(43) Veröffentlichungstag der Anmeldung:
**05.10.83 Patentblatt 83/40**

(45) Bekanntmachung des Hinweises auf die Patenterteilung:
**01.07.87 Patentblatt 87/27**

(84) Benannte Vertragsstaaten:
**AT BE CH DE FR GB IT LI SE**

(56) Entgegenhaltungen:
**DE-C-430 799**
**FR-A-549 249**
**GB-A-510 526**
**GB-A-881 353**

(73) Patentinhaber: **DEERE & COMPANY, 1 John Deere Road, Moline Illinois 61265 (US)**

(72) Erfinder: **Kabele, Dennis Frederick, 4023 Crestview Dr., Cedar Falls Iowa 50613 (US)**
Erfinder: **Hauser, Herbert Joseph, Jr., 410 Mitchell, Waterloo Iowa 50702 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 090 295 B1

## Beschreibung

Die Erfindung bezieht sich auf einen in einer Zylinderbuchse auf und ab bewegbaren Kolben mit einer Kolbenbolzenbohrung, einem darin einsetzbaren Kolbenbolzen, einer im Bereich der Kolbenbolzenbohrung in die Außenwand des Kolbens eingearbeiteten Nut und einem in die Nut einsetzbaren zweiteilig ausgebildeten Einsatz.

Herkömmliche Kolben unterliegen einem Kolbenspiel, da zwischen der Kolbenaußenwand und der Zylinderbuchse ein gewisser Freiraum vorhanden sein muß. Das Kolbenspiel ist für den höchstbelasteten warmen Motor zu bemessen und ist daher für den im Bereich der meist verwendeten Teillasten kühler laufenden Motor zu groß, so daß der Kolben beim Anlagewechsel kippt und klappert, wodurch die Laufruhe des Motors beträchtlich beeinträchtigt wird. Hinzu kommen bei zu großem Kolbenspiel noch Kavitationsprobleme, und zwar an der Außenseite der Zylinderbuchse infolge der Kolbenstöße beim Kippen. Die Kolbenstöße rufen in dem die Zylinderbuchse umgebenden Kühlmittel Druck- und Verdünnungswellen hervor. Das Ergebnis sind positive und negative Druckumkehrungen im Wechsel, die im Kühlmittel bis zu 1000fach/sek auftreten können. Während des negativen Zyklus werden mit Gas oder Dampf gefüllte Löcher bzw. Blasen nuklearen und wachsen, was beim positiven Zyklus zum Stillstand kommt oder umgekehrt wird. Die Gasblasen werden schließlich implodieren, wodurch die Außenseite der Zylinderbuchse großen Drücken und letztlich einer lochfraßähnlichen Zerstörung ausgesetzt ist.

Bei dem Kolben, von dem die Erfindung ausgeht (GB-A-881 353), greift der Kolbenbolzen mit seinen Enden in je eine Aussparung der Einsätze ein. Hierdurch wird ein Verdrehen der Einsätze verhindert, nicht jedoch ein Längsverschieben des Kolbenbolzens, und zwar deshalb, weil die Einsätze in einem gewissen Maße flexibel ausgebildet sein müssen, da sie sich sonst nicht über die Enden des Kolbenbolzens schieben lassen, was zu einer Längsverschiebung des Kolbenbolzens und im Einsatz zu unerwünschten Folgen führen kann. Im übrigen sind die Aussparungen nur mit großem Aufwand in die Einsätze eindrehbar, wobei enge Toleranzen zu beachten sind.

Außerdem ist eine Ausführung bekannt (DE-C-525 968), bei der der Kolbenzapfen an seinen Enden zu einer im Kolben eingearbeiteten Ringnut ausgerichtete Nuten aufweist, in die ein offener Ring eingesetzt ist. Dieser sichert den Kolbenzapfen gegen Verdrehen und kann sich aber selbst in der Ringnut verdrehen.

Die mit der Erfindung zu lösende Aufgabe wird darin gesehen, die Vorrichtung zum Auffangen des Kolbenspiels noch einfacher auszubilden.

Diese Aufgabe ist nach der Erfindung dadurch gelöst worden, daß die Enden des Einsatzes in die Enden des Kolbenbolzens eingreifen und dort gegen den Kolbenbolzen anliegen. Auf diese Weise wird der Kolbenbolzen in den Einsatz miteinbezogen, so daß er keiner weiteren Arretierung gegen Längsverschiebung bedarf, da die Einsätze wie Segerringe wirken und dabei den Kolbenbolzen halten, so daß die Einsätze nicht drehen und die vorgegebenen Einsatzverhältnisse immer erhalten bleiben. Hinzu kommt, daß die Einsätze und die Enden des Kolbenbolzens leicht bearbeitbar sind.

Ist der Kolben in seiner Höhe kompakt auszubilden, so bietet sich bei einem Kolben mit in seine Außenwand eingearbeiteter Ringnut an, daß der Einsatz aus zwei C-förmig oder schalenförmig ausgebildeten Teilen besteht, die den Kolben umfangsmäßig umfassen.

Damit sich zwischen den normalerweise vorgesehenen Kolben und Ölabstreifringen und dem Einsatz kein Ölstau bildet, kann nach der Erfindung vorgesehen werden, daß die Rillen in Längsrichtung des Kolbens oder leicht geneigt dazu verlaufen.

In einfacher Weise kann der Kolbenbolzen, der normalerweise über Seegerringe im Kolben gegen Längsverschiebung gesichert wird, dadurch gegen Längsverschiebung gesichert werden, daß die Enden der Einsätze in die Ringnuten formschlüssig eingreifen.

Sollte zusätzlich auch noch eine Sicherung des Kolbenbolzens gegen Drehung gewünscht werden, so kann nach der Erfindung der Kolbenbolzen endseitig mit Anschlagflächen versehen sein, in die die Enden der Einsätze formschlüssig eingreifen.

Bei derartig ausgebildeten Einsätzen kann das Kolbenspiel auch bei unteren Betriebstemperaturen relativ klein gehalten werden, wenn die Einsätze aus einem Werkstoff hergestellt sind, dessen thermische Ausdehnung etwa dem Werkstoff der Zylinderbuchse entspricht. Diese vorteilhafte Wirkung läßt sich noch dadurch weiter verbessern, daß die Einsätze darüber hinaus aus einem Werkstoff hergestellt sind, dessen thermische Ausdehnung geringer ist als die des Werkstoffs des Kolbens.

In der Zeichnung sind zwei nachfolgend näher erläuterte Ausführungsbeispiele der Erfindung dargestellt. Es zeigt

Figur 1 in perspektivischer Darstellung ein Ausführungsbeispiel einer verminderten Stößen ausgesetzten Kolbenvorrichtung in auseinandergezogener Anordnung,

Figur 2 eine Schnittdarstellung der Kolbenvorrichtung, und zwar die Verhältnisse darstellend, wenn der Verbrennungsmotor noch kalt ist, und

Figur 3 ein weiteres Ausführungsbeispiel für die Befestigung eines Kolbenbolzens über C-förmige Einsätze.

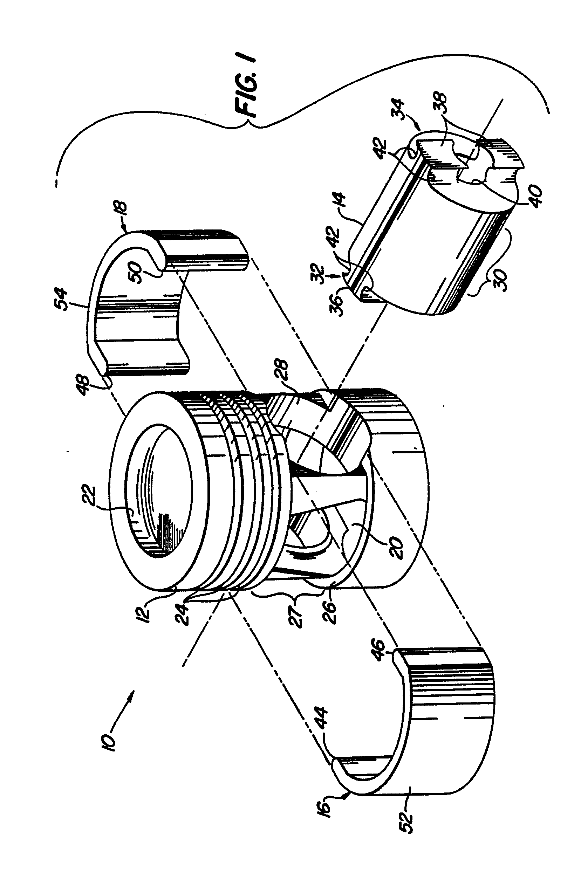

In Figur 1 der Zeichnung ist eine verminderten Stößen ausgesetzte Kolbenvorrichtung 10 dargestellt. Sie weist einen zylindrischen Körper 12, einen Kolbenbolzen 14 und ein Paar C-förmig ausgebildete Einsätze 16 und 18 auf. Der zylindrische Körper 12 ist vorzugsweise aus Leichtmetall wie Aluminium hergestellt, das einen hohen Koeffizienten für thermische Ausdehnung hat. In ihn sind mit Bezug auf die Längsachse ein Hohlraum 20 sowie im Bereich seines Kopfendes eine Verbrennungskammer 22 eingearbeitet. Im oberen Bereich des zylindrischen Körpers 12 sind Ringnuten 24 für nicht dargestellte Ölabstreifringe oder dergleichen vorgesehen und darunter eine sehr breite Nut 26. Eine Kolbenbolzenbohrung im zylindrischen Körper 12 - senkrecht zur Längsachse der Kolbenvorrichtung 10 angeordnet - ist mit 28 bezeichnet. Sie dient zur Aufnahme des Kolbenbolzens 14 und schneidet den Hohlraum 20 derart, daß ein Mittelstück 30 des Kolbenbolzens 14 eine der Einfachheit halber nicht dargestellte Pleuelstange aufnehmen kann, über die die Kolbenvorrichtung 10 mit einer ebenfalls nicht eingezeichneten Kurbelwelle eines Verbrennungsmotors verbunden werden kann. Hierbei sind die Kolbenbolzenbohrung 28 und die breite Nut 26 so angeordnet, daß eine Ebene, die durch die Mittenachse der breiten Nut 26 verläuft, ebenfalls durch die Zentralachse des Kolbenbolzens 14 verläuft. Hinzu kommt, daß die Breite der Nut 26 in etwa dem Durchmesser des Kolbenbolzens 14 entspricht.

Der Kolbenbolzen ist aus einem Werkstoff mit hoher Festigkeit wie Stahl hergestellt, damit er Biegekräfte auffangen kann. Seine Enden 32 und 34 sind im Vergleich mit dem verbleibenden Rest des Kolbenbolzens ungleichförmig ausgeführt und bilden nach außen stehende Vorsprünge 36 und 38. Diese könnten sich auch über die gesamte Länge des Kolbenbolzens 14 erstrecken. Aus Gewichtsersparnisgründen ist in den Kolbenbolzen außerdem eine Längsbohrung 40 eingearbeitet und die Vorsprünge 36 und 38 weisen an ihren Seitenflächen halbkreisförmige Einschnitte 42 auf, die für die Enden 44 und 46 des Einsatzes 16 und die Enden 48 und 50 des Einsatzes 18 komplementäre Oberflächen bilden. Hierzu sind die Enden 44 bis 50 so ausgebildet, daß sie in die Einschnitte 42 mehr oder weniger satt eingreifen. Sie sind, wie aus Figur 1 erkennbar ist, convex oder abgerundet gestaltet, so daß sie, wenn sie in den Einschnitten 42 anliegen, eine Axialverschiebung des Kolbenbolzens 14 in Längsrichtung verhindern.

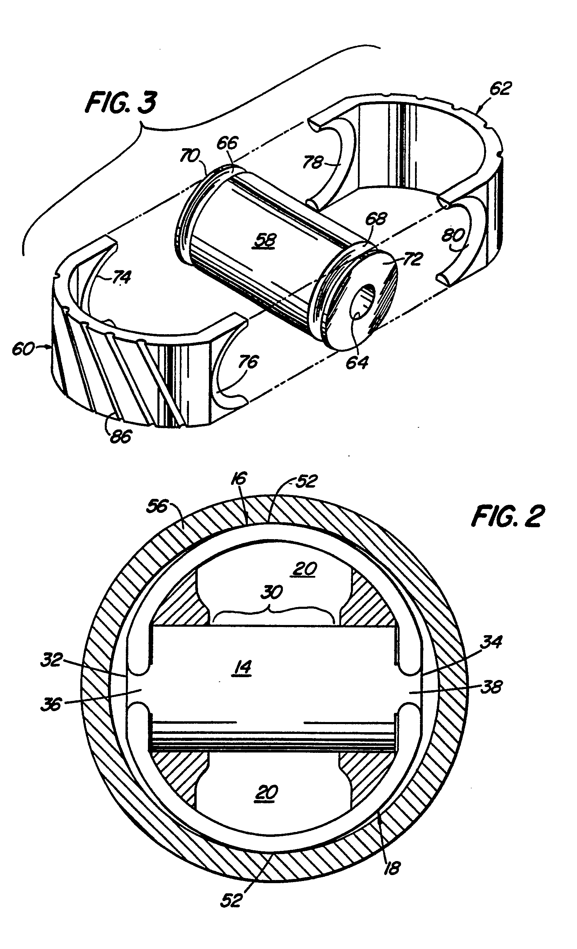

Aus Figur 2 wiederum ist zu ersehen, daß das Paar C-förmig ausgebildeter Einsätze 16 und 18 lose in die breite Nut 26 eingesetzt ist und, wenn die Enden 44 bis 50 in den Einschnitten 42 anliegen, mit den Vorsprüngen 36 und 38 einen allseits geschlossenen Bügel bildet, dessen Außenumfang etwas größer ist als der Außenumfang des zylindrischen Körpers 12. Hierdurch wird ein Kontakt der Einsätze 16 und 18 mit der Innenwand einer Zylinderbuchse 56 o.dgl. erleichtert. Vorzugsweise soll ein Teil einer äußeren Oberfläche 52 des Einsatzes 16 und ein Teil einer äußeren Oberfläche 54 des Einsatzes 18 ständig, d.h. sowohl bei niedrigen als auch bei hohen Betriebstemperaturen, gegen die Innenwand der Zylinderbuchse 56 anliegen. Dabei ist darauf zu verweisen, daß der in Fig. 2 dargestellte Abstand zwischen der Zylinderbuchse 56 und den Enden 32 und 34 des Kolbenbolzens 14 tatsächlich nur den Bruchteil eines Millimeters beträgt. Der Freiraum zwischen den Einsätzen 16 und 18 und der Zylinderbuchse 56 andererseits erlaubt es den Einsätzen auszubiegen und sich in diesen Freiraum dann auszudehnen, wenn sie eine Temperatur aufweisen, die höher ist als die der Zylinderbuchse.

Die C-förmig ausgebildeten Einsätze 16 und 18 sind darüber hinaus aus einem Werkstoff hergestellt, der eine ähnliche thermische Ausdehnung hat wie die Zylinderbuchse 56. Dieser Werkstoff kann gesintertes eisenhaltiges Material sein, das ähnliche Eigenschaften wie Gußeisen sowie geringe Mengen Kupfer und andere Metalle aufweist. Andererseits ist die thermische Ausdehnung der C-förmig ausgebildeten Einsätze 16 und 18 geringer als die des zylindrischen Körpers 12. Hierdurch wird sichergestellt, daß die C-förmig ausgebildeten Einsätze 16 und 18 stets mit der Zylinderbuchse 56 Kontakt haben, wodurch sowohl im kalten als auch im heißen Betriebszustand ein mögliches Kolbenkippen oder Flattern verringert bzw. auf ein Mindestmaß reduziert wird. Auf diese Weise lassen sich weiter die Motorengeräusche besser kontrollieren und die Kavitation, die durch die Vibration der Zylinderbuchse gegen die sie von außen umgebende Kühlflüssigkeit hervorgerufen wird, läßt sich ganz ausschalten oder kann zumindest reduziert werden. Gleichzeitig kann infolge des zumindest verringerten Kolbenkippens schwereres Material mit einer größeren Masse für den Kolben selbst Verwendung finden. Gerade bei Kolben aus Material mit keramischen Eigenschaften, wie es in Zukunft immer häufiger verwendet werden wird, wird sich dies besonders vorteilhaft auswirken.

In Figur 3 ist eine weitere Ausführungsmöglichkeit für einen Kolbenbolzen 58 mit C-förmig ausgebildeten Einsätzen 60 und 62 dargestellt. Auch hier ist der Kolbenbolzen 58 mit einer mittigen Längsbohrung 64 versehen und in seine Stirnenden ist je eine Ringnut 66 und 68 eingearbeitet. Dabei befindet sich die Ringnut 66 am Stirnende 70 und die Ringnut 68 am anderen Stirnende 72. Beide Stirnenden sind vorzugsweise eben ausgebildet und haben keinen Kontakt mit der Zylinderbuchse. In ihre Ringnuten 66 und 68 greifen die hierzu konkav ausgebildeten Enden 74 und 76 des Einsatzes 60 und die entsprechend ausgebildeten Enden 78 und 80 des Einsatzes 62 im zusammengebauten Zustand ein. Hierdurch kann sich der Kolbenbolzen 58 relativ zu dem zylindrischen Körper 12 drehen, was bei dem Kolbenbolzen 13 nach Figur 1 und 2 natürlich nicht möglich ist. In den Außenseiten der C-förmig ausgebildeten Einsätze 60 und 62 sind eine oder mehrere Abflußrinnen oder Rillen 86 vorgesehen. Sie haben einen halbkreisförmigen Querschnitt und erstrecken sich über die gesamte Höhe der Einsätze 60 und 62. Sie erleichtern während der Auf- und Abbewegung des zylindrischen Körpers 12 in der Zylinderbuchse den Öltransport im Bereich der Einsätze. Hierdurch wird mit Sicherheit vermieden, daß Öl zwischen den Einsätzen und den Ölabstreifringen eingeschlossen wird, wodurch während der Aufwärtsbewegung einer Tendenz des Öls, in die Verbrennungskammer an den Ölabstreifringen vorbei zu dringen, entgegengewirkt ist. Vorzugsweise sind die Abflußrinnen 86 mit Bezug auf die Längsachse der Kolbenvorrichtung in einem Winkel von 10° bis 60° angeordnet, wodurch während der Auf- und Abbewegung ferner ein Fressen, Kratzen oder ganz allgemein eine Abnutzung verhindert wird.

Die erfindungsgemäße Vorrichtung wurde im Zusammenhang mit einem Verbrennungsmotor beschrieben. Sie kann aber überall dort verwendet werden, wo ähnliche Einsatzbedingungen herrschen, wie bei Kompressoren usw.

**Patentansprüche**

1. In einer Zylinderbuchse (56) auf und ab bewegbarer Kolben (12) mit einer Kolbenbolzenbohrung (28), einem darin einsetzbaren Kolbenbolzen (14 bzw. 58), einer im Bereich der Kolbenbolzenbohrung (28) in die Außenwand des Kolbens (12) eingearbeiteten Nut (26) und einem in die Nut (26) einsetzbaren zweiteilig ausgebildeten Einsatz (16, 18, 60 bzw. 62), dadurch gekennzeichnet, daß die Enden (44, 46, 48, 50, 74, 76, 78 bzw. 80) des Einsatzes (16, 18, 60 bzw. 62) in die Enden (32, 34, 70 bzw. 72) des Kolbenbolzens (14 bzw. 58) eingreifen und dort gegen den Kolbenbolzen (14 bzw. 58) anliegen.

2. Kolben (12) nach Anspruch 1 mit einer in die Außenwand des Kolbens (12) eingearbeiteten Ringnut (26), dadurch gekennzeichnet, daß der Einsatz (16, 18, 60 bzw. 62) aus zwei C-förmig ausgebildeten Teilen besteht.

3. Kolben (12) nach Anspruch 1 oder 2 mit in dem Einsatz vorgesehenen Rillen, dadurch gekennzeichnet, daß die Rillen (86) in Längsrichtung des Kolbens (12) oder leicht geneigt dazu verlaufen.

4. Kolben (12) nach einem oder mehreren der vorherigen Ansprüche mit einem Kolbenbolzen (58), dessen Enden (70, 72) Ringnuten (66 und 68) aufweisen, dadurch gekennzeichnet, daß die Enden (74, 76, 78 und 80) der Einsätze (60, 62) in die Ringnuten (66 und 68) formschlüssig eingreifen.

5. Kolben (12) nach einem oder mehreren der vorherigen Ansprüche, dadurch gekennzeichnet, daß der Kolbenbolzen (14) endseitig mit Anschlagflächen (Vorsprünge 36 und 38) versehen ist, in die die Enden (44, 46, 48 und 50) der Einsätze (16 und 18) formschlüssig eingreifen.

6. Kolben (12) nach einem oder mehreren der vorherigen Ansprüche, dadurch gekennzeichnet, daß die Einsätze (16, 18, 60 und 62) aus einem Werkstoff hergestellt sind, dessen thermische Ausdehnung etwa dem Werkstoff der Zylinderbuchse (56) entspricht.

7. Kolben (12) nach einem oder mehreren der vorherigen Ansprüche, dadurch gekennzeichnet, daß die Einsätze (16, 18, 60 und 62) aus einem Werkstoff hergestellt sind, dessen thermische Ausdehnung geringer ist als die des Werkstoffs des Kolbens (12).

**Claims**

1. Piston (12) reciprocating in a cylinder liner (56) and having a gudgeon pin bore (28), a gudgeon pin (14 or 58) insertable therein, a groove (26) worked into the outer wall of the piston (12) in the region of the gudgeon pin bore (28), and a two-part insert (16, 18, 60 and 62, respectively) insertable in the groove (26), characterised in that the ends (44, 46, 48, 50, 74, 76, 78 and 80, respectively) of the insert (16, 18, 60 and 62, respectively) engage in the ends (32, 34, 70 and 72, respectively) of the gudgeon pin (14 or 58) and bear thereat against the gudgeon pin (14 or 58).

2. Piston (12) according to claim 1 having an annular groove (26) worked into the outer wall of the piston (12), characterised in that the insert (16, 18, 60 and 62, respectively) consists of two C-shaped parts.

3. Piston (12) according to claim 1 or 2 having grooves provided in the insert, characterised in that the grooves (86) extend in the longitudinal direction of the piston (12) or slightly inclined with respect thereto.

4. Piston (12) according to one or more of the preceding claims having a gudgeon pin (58) whose ends (70, 72) have annular grooves (66 and 68), characterised in that the ends (74, 76, 78 and 80) of the inserts (60, 62) engage in mating relationship in the annular grooves (66 and 68).

5. Piston (12) according to one or more of the preceding claims, characterised in that the gudgeon pin (14) is provided at its ends with abutment surfaces (projections 36 and 38) in which the ends (44, 46, 48 and 50) of the inserts (16 and 18) engage in mating relationship.

6. Piston (12) according to one or more of the preceding claims, characterised in that the inserts (16, 18, 60 and 62) are made of a material whose thermal expansion corresponds approximately to that of the material of the cylinder liner (56).

7. Piston (12) according to one or more of the preceding claims, characterised in that the inserts (16, 18, 60 and 62) are made of a material whose thermal expansion is lower than that of the material of the piston (12).

## Revendications

1. Piston (12) pouvant se déplacer en un mouvement de va-et-vient dans une chemise de cylindre (56), comportant un perçage (28) pour l'axe de piston, un axe de piston (14, respectivement 58) pouvant y être inséré, une gorge (26) pratiquée dans la paroi extérieure du piston (12) dans la zone du perçage (28) destiné à l'axe de piston et une fourrure (16, 18, 60, respectivement 62) réalisée en deux parties pouvant être insérée dans la gorge (26), caractérisé en ce que les extrémités (44, 46, 48, 50, 74, 76, 78 ou 80) de la fourrure (16, 18, 60 ou 62) s'engagent dans les extrémités (32, 34, 70 ou 72) de l'axe de piston (14, respectivement 58) et s'y appuient contre l'axe de piston (14, respectivement 58).

2. Piston (12) suivant la revendication 1, comportant une gorge annulaire (26) pratiquée dans la paroi extérieure du piston (12), caractérisé en ce que la fourrure (16, 18, 60 ou 62) comprend deux parties en C.

3. Piston (12) suivant la revendication 1 ou 2, comportant des rainures prévues dans la fourrure, caractérisé en ce que les rainures (86) s'étendent dans la direction longitudinale du piston (12) ou sont légèrement inclinées par rapport à elle.

4. Piston (12) suivant une ou plusieurs des revendications précédentes, comportant un axe de piston (58) dont les extrémités (70, 72) comportent des gorges annulaires (66 ou 68), caractérisé en ce que les extrémités (74, 76, 78 et 80) des fourrures (60, 62) s'engagent avec concordance de forme dans les gorges annulaires (66 et 68).

5. Piston (12) suivant une ou plusieurs des revendications précédentes, caractérisé en ce que l'axe de piston (14) comporte à ses extrémités des surfaces de butée (saillies 36 et 38) dans lesquelles les extrémités (44, 46, 48 et 50) des fourrures (16 et 18) s'engagent avec concordance de forme.

6. Piston (12) suivant une ou plusieurs des revendications précédentes, caractérisé en ce que les fourrures (16, 18, 60 et 62) sont en une matière dont la dilatation thermique correspond à peu près à celle de la matière de la chemise de cylindre (56).

7. Piston (12) suivant une ou plusieurs des revendications précédentes, caractérisé en ce que les fourrures (16, 18, 60 et 62) sont en une matière dont la dilatation thermique est inférieure à celle de la matière du piston (12).

FIG. I

0 090 295

FIG. 3

FIG. 2